# EUROPEAN PATENT APPLICATION

(11) **EP 4 557 083 A1**
(43) Date of publication of application: **21.05.2025**
(21) Application number: 24212657.1
(22) Date of filing: 13.11.2024
(51) Int. Cl.: G06F 8/61, G06F 9/455, G06F 11/07, G06F 11/30

(54) **APPARATUS, SYSTEM, METHOD, AND PROGRAM**

(30) Priority: 16.11.2023 JP 2023195119
(71) Applicant: Yokogawa Electric Corporation, Tokyo 180-8750 (JP)
(72) Inventor: Yamagata, Takashi, Tokyo, 180-8750 (JP); Tsubota, Ichiro, Tokyo, 180-8750 (JP)
(74) Representative: Hoffmann Eitle

(57) **Abstract**

Provided is an apparatus comprising a memory unit which stores setting data for a container image acquired from a first server, a container acquisition unit which acquires a first container image from the first server, and a performance unit which runs the first container image by providing the setting data, thereby implementing a container-type apparatus unit which acquires a first state data indicating a state of a facility, where the container acquisition unit further acquires from the first server a second container image which is different from the first container image, and the apparatus further comprises a container updating unit which causes the performance unit to provide the setting data and run the second container image, thereby updating the container-type apparatus unit which is based on the first container image to the container-type apparatus unit which is based on the second container image.

## Description

### BACKGROUND

### 1. TECHNICAL FIELD

The present invention relates to an apparatus, a system, a method, and a program.

### 2. RELATED ART

Patent Document 1 to Patent Document 6 describes that, "A general plant monitoring and control apparatus 3 which takes in state signals output from sensors of each instrument which constitutes a plant 2 designated as a subject for monitoring and control, such as a water supply plant, a sewage plant, various manufacturing plants, or the like, and performs processing for creating a monitoring screen or the like, generates a control signal according to an input control content, and provides these to each instrument to perform processing for controlling an operational state of the plant 2, or the like" (paragraph 0014 of Patent Document 1), etc.

### Prior Art Documents

### Patent Documents

Patent Document 1: Japanese Patent Application Publication No. Hei. 11-146466
Patent Document 2: Japanese Patent Application Publication No. 2021-149789
Patent Document 3: Japanese Patent Application Publication No. 2021-144629
Patent Document 4: Japanese Patent Application Publication No. 2021-196316
Patent Document 5: Japanese Patent Application Publication No. 2021-162459
Patent Document 6: Japanese Patent Application Publication No. 2022-007222

### SUMMARY

In a first aspect of the present invention, there is provided an apparatus including a memory unit which stores setting data for a container image acquired from a first server, a container acquisition unit which acquires a first container image from the first server, and a performance unit which runs the first container image by providing the setting data, thereby implementing a container-type apparatus unit which acquires a first state data indicating a state of a facility. The setting data may include an address from which the first state data is acquired. The setting data may include the address from which the first state data is acquired, and
an address to which a second state data indicating the state of the facility in accordance with the first state data is transmitted. The apparatus may further include a data processing unit which performs data processing on the first state data to generate second state data, and the setting data may include the address from which the first state data is acquired, an input address for the data processing unit to which the first state data is output, an output address for the data processing unit from which the second state data is acquired, and an address to which the second state data is output. The container acquisition unit may further acquire another container image, and the performance unit may run the another container image to implement the data processing unit which performs data processing on the first state data to generate the second state data in accordance with the first state data, and the container-type apparatus unit may provide the acquired first state data to the data processing unit to acquire the second state data. In this case, the setting data may include the address from which the first state data is acquired, the input address for the data processing unit to which the first state data is output, the output address for the data processing unit from which the second state data is acquired, and the address to which the second state data is output.

In the apparatus above, the container acquisition unit may further acquire from the first server a second container image which is different from the first container image, and the apparatus may further include a container updating unit which causes the performance unit to provide the setting data and run the second container image, thereby updating the container-type apparatus unit which is based on the first container image to the container-type apparatus unit which is based on the second container image.

The apparatus above may include two container-type apparatus units, and the container updating unit, until an update of one of the container-type apparatus unit from among the two of the container-type apparatus unit is completed, maintains another of the container-type apparatus unit in an operational state, and in response to the update of the one of the container-type apparatus unit being completed, cause the one of container-type apparatus unit to operate, to update the another of the container-type apparatus unit.

The apparatus above may include the container updating unit, and the container updating unit, in response to the update of the one of the container-type apparatus unit being completed and the another of the container-type apparatus unit being in a standby state, updates the another of the container-type apparatus unit.

In any of the apparatuses above which includes the container updating unit, the memory unit may further store the first state data, and the container-type apparatus unit may transmit to a second server a second state data which is indicating a state of the facility and is in accordance with the first state data, and in response to the container-type apparatus unit being updated by the container updating unit, may transmit the second state data in accordance with, from among the first state data stored in the memory unit, the first state data stored while the container-type apparatus unit is updated, to the second server after the container-type apparatus unit is updated.

In any of the apparatuses above, the container-type apparatus unit may acquire the first state data from the facility and causes the memory unit to store the first state data, and in response to an amount of the first state data to be acquired from the facility at a current moment exceeding a maximum amount of data, may acquire the first state data from the facility, piece by piece thereof which is less than or equal to the maximum amount of data.

Any of the apparatuses above which includes the container updating unit may further include a data storage unit which acquires the first state data without going through the container-type apparatus unit and causes the memory unit to store the first state data, and the container-type apparatus unit may transmit to a second server a second state data which is indicating a state of the facility and is in accordance with the first state data stored in memory unit.

In any of the apparatuses above which includes the container updating unit, the container-type apparatus unit may perform a processing of a predetermined content during a predetermined time period, and the container updating unit may update the container-type apparatus unit at a time different from the predetermined time period.

Any of the apparatuses above which includes the container updating unit may further include a detection unit which detects whether the second container image is present in the first server, and in response to the second container image being detected by the detection unit, the container acquisition unit may acquire the second container image.

In a second aspect of the present invention, there is provided a system including any of the apparatuses of the first aspect, a controller which controls the facility according to a setting value which is preset for the first state data, and a server which provides a new setting value specified by a user operation to the controller via the container-type apparatus unit of the apparatus to cause the setting value in the controller to be updated to the new setting value. The controller may feedback control each actuator of the facility to reduce a difference between the setting value and a current value.

In a third aspect of the present invention, there is provided a method including storing setting data for a container image acquired from a first server, acquiring a container by acquiring a first container image from the first server, and running the first container image by providing the setting data, thereby implementing a container-type apparatus unit which acquires a first state data indicating a state of a facility.

In a fourth aspect of the present invention, there is provided a program which causes a computer to function as a memory unit which stores setting data for a container image acquired from a first server, a container acquisition unit which acquires a first container image from the first server, and a performance unit which runs the first container image by providing the setting data, thereby implementing a container-type apparatus unit which acquires a first state data indicating a state of a facility.

Note that the summary of the invention above does not list all of necessary features of the present invention. The invention may also include a sub-combination of these features.

### BRIEF DESCRIPTION OF THE DRAWINGS

Fig. 1 shows a system 1 according to an embodiment.
Fig. 2 shows an edge terminal 4 according to the embodiment, along with an integrated server 7, etc.
Fig. 3 shows an operation of the edge terminal 4.
Fig. 4 shows an example of a computer 1200 in which a plurality of aspects of the present invention may be embodied in whole or in part.

### DESCRIPTION OF EXEMPLARY EMBODIMENTS

The present invention will be described below through embodiments of the invention, but the following embodiments do not limit the invention according to the claims. In addition, not all of the combinations of features described in the embodiments are essential to the solution of the invention.

### (Overview of a System 1)

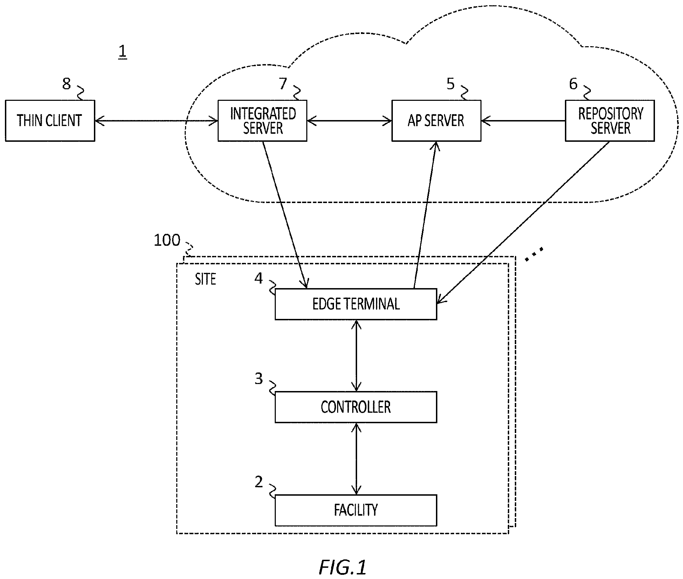

Fig. 1 shows a system 1 according to the present embodiment. The system 1 includes one or more facility (facilities) 2, controller 3, edge terminal 4, AP server 5, repository server 6, integrated server 7, and thin client 8. As an example, in the present figure, only a single facility 2 is illustrated in one site 100 (also referred to as premises), but a plurality of facilities 2 may be installed in the one site 100. The controller 3 and the edge terminal 4 may be located in the site 100 where the facility 2 is installed.

### ((Facility 2))

A state of each of the facilities 2 may be monitored by the thin client 8 via the integrated server 7. The facility 2 may be an installation, an apparatus, or the like equipped with one or more instruments (not shown in the figure). For example, the facility 2 may be a plant or may be a complex apparatus in which a plurality of instruments are combined. Examples of the plant includes a plant for managing and controlling wellheads such as a gas field and an oil field and surroundings thereof, a plant for managing and controlling hydroelectric, thermo electric and nuclear power generations and the like, a plant for managing and controlling environmental power generation such as solar power and wind power, a plant for managing and controlling water supply and sewage, a dam, and the like, etc., in addition to chemical and bio industrial plants and the like. The instrument equipped in the facility 2 is a tool, machinery, apparatus, or the like, and may be a so-called field instrument. For example, the instrument may be a sensor such as a pressure gauge, a flow meter (a differential pressure flow meter or an electromagnetic flow meter), or a temperature sensor, may be a valve such as a flow control valve or an on-off valve, or may be an actuator such as a fan, a motor, a pump, or a compressor, or may be a transmitter which transmits a signal. Each instrument may be controlled by the controller 3.

Each sensor may measure first state data (also referred to as operational data or process data) which indicates a state of the facility 2. The first state data may indicate pressure, temperature, pH, speed, flow rate, etc. as the state of the facility 2, or may indicate a yield of a product produced by the facility 2, a proportion of impurities mixed into the product, or the like. Each sensor may provide the first state data to the controller 3.

### ((Controller 3))

The controller 3 controls the facility 2. The controller 3 may acquire the first state data from each sensor of the facility 2 and control the facility 2 in accordance with the first state data. For example, the controller 3 may control the facility 2 in accordance with a setting value (also referred to as a target value) which is preset for a value of any of the first state data, and as an example in the present embodiment, the controller 3 may feedback control each actuator of the facility 2 to reduce a difference between the setting value and a current value. The setting value may be stored in a storage area of the controller 3. The storage area of the controller 3 may further store a threshold value and a magnitude of hysteresis for determining an abnormality in the value of the first state data, a tag comment for each data, a unit (industrial units, SI units), and the like. The controller 3 may control the facility 2 in a cycle of one second, as an example. When the plurality of facilities 2 are installed in the site 100, the controller 3 may control each of the facilities 2 in the site 100.

The controller 3 may provide the first state data acquired from each sensor of each of the facilities 2 to the edge terminal 4. The controller 3 and the edge terminal 4 may be connected via a network such as VNET/IP (registered trademark). VNET/IP (registered trademark) may be a network based on ETHERNET (registered trademark), and may have a communication speed of 1 Gbps, as an example. The controller 3 and the edge terminal 4 may communicate using industrial communication protocols such as Modbus, OPC-UA, and STARDOM HSE.

The controller 3 described above may be, for example, a distributed control apparatus in a Distributed Control System (DCS) or a Supervisory Control And Data Acquisition (SCADA). As an example, the controller 3 may be CENTUM (registered trademark) VP or PROSAFE (registered trademark) - RS.

### ((Edge Terminal 4))

The edge terminal 4 acquires the first state data from each sensor of each of the facilities 2 controlled by the controller 3. The edge terminal 4 may acquire first state data of each of the facilities 2 via the controller 3.

The edge terminal 4 may provide the AP server 5 with second state data in accordance with the acquired first state data. The edge terminal 4 may transmit the second state data to the AP server 5 in the cycle of, for example, 5 seconds to 30 seconds. The second state data may be data for each of the facilities 2 in the site 100 and may indicate the state of the facility 2. The second state data may be the same as the first state data, or may be different from the first state data. As an example, the second state data may be data indicating an analysis result of the first state data, or may be data acquired by performing data processing on the first state data.

Communication between the edge terminal 4, the AP server 5, and the integrated server 7 described below may be any of VPN (Virtual Private Network) communication, ODBC (Open Database Connectivity) communication, OPC-UA communication, MQTT (Message Queuing Telemetry Transport) communication, and HTTPS communication, and communication data may be transmitted in a file format of Json or Apache Parquet. The communication data may be accompanied by an electronic certificate such as SSL (Secure Socket Layer) or TLS (Transport Layer Security). This may enhance a security of the communication between the edge terminal 4 and the AP server 5, while also reducing a communication traffic volume and latency. The communication between the edge terminal 4, the integrated server 7, and the AP server 5 may be monitored by a monitoring terminal (also referred to as a security operation center) which is not shown in the figure, thereby enhancing security. Each communication between the edge terminal 4, the integrated server 7, and the AP server 5 may be performed by using a single communication cable connecting a single input port and a single output port, and points to be monitored by the monitoring terminal may be aggregated between the input port and the output port.

### ((AP Server 5))

The AP server 5 performs processing on the second state data. The AP server 5 is an example of a second server, which acquires and saves the second state data from the edge terminal 4 while also providing the second state data to integrated server 7. The AP server 5 may provide the second state data to the integrated server 7 in the cycle of, for example, 5 seconds to 30 seconds. The AP server 5 may generate the setting value for the controller 3 to control the facility 2 based on the second state data, and provide the setting value to the integrated server 7 together with the second state data. As an example, the setting value generated by the AP server 5 may be a value recommended for reducing emission of carbon dioxide from the facility 2 or for reducing power consumption. The AP server 5 may be a container implemented by running a container image on a host hardware and an OS. The AP server 5, and the repository server 6 and the integrated server 7 described below may be implemented by cloud computing.

### ((Repository Server 6))

The repository server 6 is an example of a first server and may store one or more container images to be run on the edge terminal 4 and provide any of the container images to the edge terminal 4. The repository server 6 may further store the one or more container images to be run on the AP server 5 and provide any of the container images to the AP server 5.

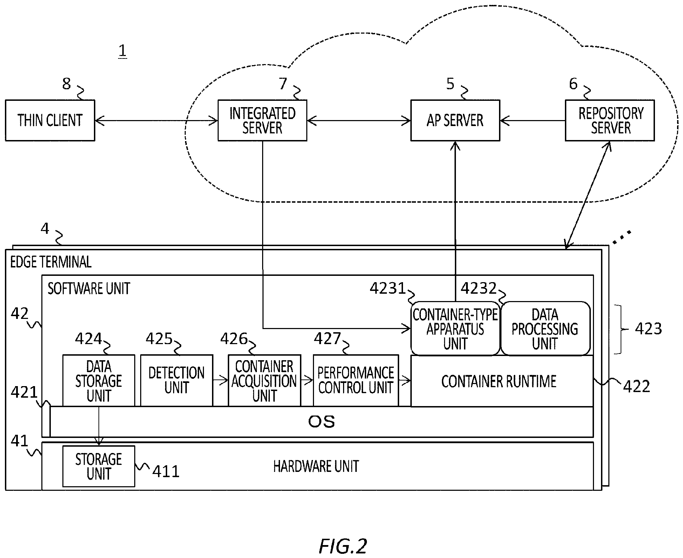

As an example in the present embodiment, the repository server 6 may store the container image (also referred to as the container image for an apparatus unit) which is to be run on the edge terminal 4 to implement a container-type apparatus unit 4231 (see Fig. 2) described below, the container image (also referred to as the container image for a processing unit) which is to be run on the edge terminal 4 to implement a data processing unit 4232 (see Fig. 2) described below, and the container image (also referred to as the container image for a server) which is to be run on the AP server 5 to implement a container not shown in the figure, in association with separate identification information. The repository server 6 may store one container image for each of the apparatus unit, the processing unit, and the server by default, and may further store the one or more container images of different versions, at least as the container image for the apparatus unit, in association with version information.

The repository server 6 may be a DOCKER (registered trademark) registry and may provide a DOCKER (registered trademark) image as the container image. The container images in the repository server 6 may be managed and edited by a container management application such as DOCKER (registered trademark), PORTAINER, HASHICORP NOMAD, or AZURE (trademark or registered trademark) Edge Essentials.

### ((Integrated Server 7))

The integrated server 7 assists in monitoring each of the facilities 2. The integrated server 7 may enable monitoring of each of the facilities 2 by the thin client 8, by providing to the thin client 8 the second state data for each of the facilities 2 provided by the AP server 5.

The integrated server 7 may control each of the facilities 2 in response to a user operation via the thin client 8. The integrated server 7 may generate the setting value for the controller 3 to control the facility 2, based on the second state data. The integrated server 7 may generate the setting value based on a value input by a user. The setting value to be generated by the integrated server 7 may be a value recommended for maintaining the facility 2 in a normal state. The integrated server 7 may provide the setting value generated by at least one of the integrated server 7 or the AP server 5 to the thin client 8, and may provide a new setting value specified by the user via the thin client 8 to the controller 3 via the edge terminal 4, to cause the controller 3 to update the setting value in the controller 3 to the new setting value. The integrated server 7 may control the facility 2 by updating the setting value in this manner. The integrated server 7 may be externally connected to a display apparatus and an input apparatus not shown in the figure, and may cause the display apparatus to display the setting value generated by at least one of the integrated server 7 or the AP server 5, and provide a new setting value specified by the user via the input apparatus to the controller 3 via the edge terminal 4, to cause the controller 3 to update the setting value in the controller 3 to the new setting value. When the integrated server 7 causes the controller 3 to update the setting value, the integrated server 7 may cause the update after acquiring an approval operation by the user via the thin client 8, instead of immediately causing the update as soon as the setting value to be updated is acquired and the controller 3 is enabled to update the setting value. In the present embodiment, the setting value in the controller 3 is updated in accordance with the user operation in this manner, thereby reducing an impact on an operation of the facility 2 compared to a case where the setting value is updated automatically. As a result, the setting value which may cause an economically unacceptable damage to the facility 2 can be prevented from being set. Further, even if a setting of the setting value may incur a minor impact on the facility 2 (as an example, a light is turned off for a few seconds only, etc.), in a case where it is expected that an advantage outweigh an disadvantage due to the impact, the setting value can be set in the controller 3 upon the approval operation by the user. The integrated server 7 may control each of the facilities 2 in the cycle of 5 seconds, as an example. The integrated server 7 may change at least one of the threshold value for determining an abnormality in the value of the first state data, the magnitude of hysteresis, the tag comment for each data, or the unit (industrial units, SI units) stored in the controller 3, in accordance with the user operation. The integrated server 7 may also provide the setting value provided to the controller 3 to the AP server 5, and cause the setting value to be stored as control data for the facility 2.

The integrated server 7 according to the present embodiment may cause the thin client 8 to display a GUI screen including the second state data and a recommended setting value for each of the facilities 2, to perform processing in accordance with the user operation performed in the GUI screen. The integrated server 7 may be a virtual machine (VM) implemented by running software on the host hardware.

### ((Thin Client 8))

The thin client 8 may display the second state data for each of the facilities 2, provided by the integrated server 7. The thin client 8 may further display the setting value provided by the integrated server 7, and, in response to the user operation in which any of the setting values is specified as the setting value to be used, may provide the specified setting value to the integrated server 7. As an example in the present embodiment, the thin client 8 may display the GUI screen provided by the integrated server 7, and provide the integrated server 7 with a signal in accordance with the user operation performed in the GUI screen. The GUI screen may be configured with HTML and run on a web browser.

The network connecting the thin client 8 and the integrated server 7 may be the same as the network connecting the edge terminal 4, the AP server 5, and the integrated server 7, or may be different. The thin client 8 may access the integrated server 7 via multi-factor authentication (MFA).

### (Edge Terminal 4)

Fig. 2 shows the edge terminal 4 according to the present embodiment, along with the integrated server 7, etc. In the present figure, illustrations of the controller 3 and the facility 2 are omitted. The edge terminal 4 may be an example of an apparatus, and includes a software unit 42 and a hardware unit 41.

### ((Software Unit 42))

The software unit 42 is a functional part which is implemented by loading various programs and data into the hardware unit 41, and provides a container-type hierarchical software environment. The software unit 42 includes, from a higher level side (lower side in the figure) to a lower level side (upper side in the figure), an OS 421, a container runtime (also referred to as a container engine) 422, and a container group 423. Further, the software unit 42 further includes, on the lower level side of the OS 421 , a data storage unit 424 , a detection unit 425 , a container acquisition unit 426 , and a performance control unit 427.

### (((OS 421)))

The OS 421 runs on the hardware unit 41.

The OS 421 may be LINUX (registered trademark) (LINUX (registered trademark) distribution such as ubuntu as an example), may be WINDOWS (registered trademark), or may be any other OS.

### (((Container Runtime 422())

The container runtime 422 is an example of a performance unit, which runs the container image to implement the container-type apparatus unit 4231 and the data processing unit 4232 described below in the container group 423. The container runtime 422 may implement the container-type apparatus unit 4231 by providing the setting data for the container image to run the container image. Providing the setting data to run the container image may mean that the container runtime 422 acquires the setting data and provides it to the container image to run the container image, or may mean that the container runtime 422 runs the container image while the setting data is stored in a predetermined storage area so that it is automatically read by the container image. The setting data for implementing the container-type apparatus unit 4231 may be stored in advance in a memory unit 411 described below. Details of the setting data is described below.

The container runtime 422 may run the container image acquired from the repository server 6 to further implement the data processing unit 4232 in the container group 423. The data processing unit 4232 may be implemented by using the setting data provided by the repository server 6 along with the container image, or, similar to the container-type apparatus unit 4231, may be implemented by using the setting data stored in advance in the memory unit 411.

Running of the container image by the container runtime 422 may be controlled by the performance control unit 427 described below. Details on the container-type apparatus unit 4231 and the data processing unit 4232 are described below.

### (((Container Group 423)))

The container group 423 includes one or more containers implemented by running the container image provided by the repository server 6, by the container runtime 422. The container group 423 according to the present embodiment may include the container-type apparatus unit 4231 and the data processing unit 4232 as containers.

### (((Container-type Apparatus Unit 4231)))

The container-type apparatus unit 4231 may be implemented by running the container image for the apparatus unit, provided by the repository server 6, and as an example in the present embodiment, may be implemented by running a first container image or a second container image. The second container image may be a container image different from the first container image, and may be an updated version of the first container image. As an example in the present embodiment, if the container-type apparatus unit 4231 is already implemented, its container image may be the first container image, and a container image which is a newer version than the first container image may be the second container image.

The container-type apparatus unit 4231 may acquire the first state data. The container-type apparatus unit 4231 according to the present embodiment may acquire the first state data for each of the facilities 2 from the memory unit 411 described below, and may transmit the second state data in accordance with the acquired first state data to the AP server 5. As an example in the present embodiment, the second state data may be data provided by the data processing unit 4232 in response to providing a first data to the data processing unit 4232. The container-type apparatus unit 4231 may provide the acquired first state data to the data processing unit 4232, acquire the second state data from the data processing unit 4232, to transmit the second state data to the AP server 5. The container-type apparatus unit 4231 may transmit the second state data to the AP server 5 in the cycle of, for example, 5 seconds to 30 seconds. The container-type apparatus unit 4231 may transmit the second state data to the AP server 5 in the file format of Json or Apache Parquet.

The container-type apparatus unit 4231 may, in response to a new setting value for the value of any of the first state data being provided by the integrated server 7, provide the new setting value to the controller 3. As a result, the new setting value provided by the integrated server 7 is provided to the controller 3 via the container-type apparatus unit 4231, and the setting value in the controller 3 may be updated to the new setting value provided by the integrated server 7.

### (((Data Processing Unit 4232)))

The data processing unit 4232 may be implemented by running the container image for the processing unit provided by the repository server 6. The data processing unit 4232 may analyze the first state data and may generate the second state data including an analysis result indicating the state of the facility 2. The second state data may further include the original of the first state data itself in addition to the analysis result, or may further include a part of the first state data selected from the original of the first state data.

For example, the data processing unit 4232 may have a learning model which outputs an index value (also referred to as a health index) indicating the state of the facility 2 in response to the first state data being provided, and may provide the first state data to the learning model to acquire the output index value as the analysis result. The learning model may be trained with learning data including the first state data and a label indicating a quality of the state of the facility. The data processing unit 4232 may perform a learning processing of the learning model for each reference period by using the learning data including the first state data acquired within the period and the label assigned to the first state data by the user. The data processing unit 4232 may exclude, from among the first state data provided by the container-type apparatus unit 4231, the first state data which is used for the learning data, and select the first state data which is not used for the learning data to include in the second state data. The data processing unit 4232 may perform the learning processing, an analysis, and a data selection by using a method disclosed in Patent Document 2 described above.

The data processing unit 4232 may select the first state data, from among a plurality of types of the first state data provided by the container-type apparatus unit 4231, with a high (or low) priority, which is preset for each type of the first state data, to include in the second state data. The data processing unit 4232 may perform the data selection by using the method disclosed in Patent Document 3 described above.

The data processing unit 4232 may exclude first state data, from among the plurality of types of the first state data provided by the container-type apparatus unit 4231, of a type which is predictable within a standard accuracy range from another type of the first state data, and select the first state data of a type which is unpredictable within the standard accuracy range to include in the second state data. The data processing unit 4232 may perform the data selection by using the method disclosed in Patent Document 4 described above.

The data processing unit 4232 may, instead of the first state data provided by the container-type apparatus unit 4231, include a reduced amount of data by reducing a bit width of the first state data, in the second state data. The data processing unit 4232 may reduce an amount of data by using the method disclosed in Patent Document 5 described above.

The data processing unit 4232 may, instead of the first state data provided by the container-type apparatus unit 4231, include data acquired by extracting a low frequency component of the first state data, in the second state data. The data processing unit 4232 may reduce the amount of data by using the method disclosed in Patent Document 6 described above.

### (((Data Storage Unit 424)))

The data storage unit 424 acquires the first state data without going through the container-type apparatus unit 4231 and causes the memory unit 411 described below to store the first state data. The data storage unit 424 may acquire first state data from the facility 2 via the controller 3. The data storage unit 424 may acquire the first state data in response to an acquisition request for the first state data. The acquisition request may be automatically generated in the edge terminal 4 in the cycle of, for example, 5 seconds to 30 seconds. The type of the first state data which is a subject of the acquisition request may be the same or may be different, for each of the cycle. Alternatively or additionally, the acquisition request may be generated unexpectedly, such as when a latest data is required, and as an example, may be generated in response to the user operation on the edge terminal 4, the integrated server 7, or the thin client 8, or may be generated in response to a result of an arithmetic operation on the AP server 5 or the integrated server 7. The acquisition request may include a range of the first state data which is the subject, may include a storage address of the first state data, may include identification information indicating the type of first state data, and may include information indicating measurement timing of the first state data (as an example, information indicating a most recent measurement timing). The acquisition request may include an amount of the first state data which is the subject. The data storage unit 424 may acquire the first state data from the facility 2 within a range not exceeding a predetermined maximum amount of data per unit time. The data storage unit 424 may, in response to a total amount of the first state data exceeding a maximum amount of data, acquire the first state data from the facility 2, piece by piece thereof which is less than or equal to the maximum amount of data. In other words, when the total amount of the first state data to be acquired exceeds the maximum amount of data, the data storage unit 424 may acquire unacquired first state data in the next or subsequent cycles. The data storage unit 424 may calculate the total amount of the first state data to be acquired each time the acquisition request is received. As an example, the data storage unit 424 may detect the total amount of the first state data to be acquired, from the amount of data included in the acquisition request, or may detect the total amount of the first state data from the amount of data of an address included in the acquisition request. In a case where a new acquisition request is received while there is the unacquired first state data among the first state data which is the subject of the acquisition request, the data storage unit 424 may include the unacquired first state data in the first state data to be acquired, and calculate the total amount of the first state data. The data storage unit 424 may cause the memory unit 411 to store the first state data in the file format of Json or Apache Parquet.

### (((Detection Unit 425)))

The detection unit 425 detects whether the container image for the apparatus is present in the repository server 6. When the container-type apparatus unit 4231 is implemented in the edge terminal 4, the detection unit 425 detects whether the second container image (as an example in the present embodiment, the container image for an apparatus with a newer version than the first container image) different from the container image of the container-type apparatus unit 4231 (i.e., the first container image) is present in the repository server 6. The detection unit 425 may further detect whether the container image for the processing unit is present in the repository server 6. The detection unit 425 may periodically access the repository server 6 to detect whether the container image for the apparatus or for the processing unit is present. In response to detecting the presence of the container image in the repository server 6, the detection unit 425 may provide a signal to that effect to the container acquisition unit 426.

### (((Container Acquisition Unit 426)))

The container acquisition unit 426 acquires the container image for the apparatus unit from the repository server 6. When the container-type apparatus unit 4231 is not implemented in the edge terminal 4, the container acquisition unit 426 may acquire the first container image from the repository server 6. When the container-type apparatus unit 4231 is implemented in the edge terminal 4, the container acquisition unit 426 may further acquire from the repository server 6 the second container image which is different from the container image of the container-type apparatus unit 4231 (i.e., the first container image). In response to the second container image being detected by the detection unit 425, the container acquisition unit 426 may acquire the second container image.

The container acquisition unit 426 may further acquire the container image for the processing unit from the repository server 6. The container acquisition unit 426 may provide each of the acquired container image to the performance control unit 427.

### (((Performance control unit 427)))

The performance control unit 427 controls running of the container image by the container runtime 422. The performance control unit 427 may cause the container runtime 422 to provide the setting data and run the first container image, thereby implementing the container-type apparatus unit 4231. The performance control unit 427 may be an example of a container updating unit, and may cause the setting data to be provided and cause the second container image to be run, thereby updating the container-type apparatus unit 4231 which is based on the first container image to the container-type apparatus unit 4231 which is based on the second container image. The performance control unit 427 may cause the container runtime 422 to run the container image for the processing unit to further implement the data processing unit 4232.

### ((Hardware Unit 41))

The hardware unit 41 is a part which physically constitutes the edge terminal 4, and may be a PC or may be a microcontroller. The hardware unit 41 may include one or more CPUs, one or more memories, one or more storages, and the like. As an example in the present embodiment, the hardware unit 41 includes the memory unit 411 as one of the storages.

### (((Memory unit 411)))

The memory unit 411 stores a variety of information.

The memory unit 411 according to the present embodiment may store the setting data and the first state data.

The setting data is data for the container image (as an example in the present embodiment, the container image for the apparatus unit) acquired from the repository server 6. For the setting data, a data input/output destination may be set for the container-type apparatus unit 4231 implemented by the container image for the apparatus unit and, for example, an address of a storage area where the first state data is stored may be set, from among addresses of each storage area in the memory unit 411, as the input destination for the first state data. For the setting data, an address of the data processing unit 4232 described below may be set as the output destination for the first state data, and the address of the data processing unit 4232 may be set as the input destination for the second state data. For the setting data, an address of the AP server 5 may be set as the output destination for the second state data. For the setting data, an address of the integrated server 7 may be set as the input destination for the setting value of the first state data, and an address of a storage area for the setting value in the controller 3 may be specified as the output destination for the setting value. However, a setting content according to the setting data is not limited to these, and may be another content in which the container-type apparatus unit 4231 is customized to a configuration of the edge terminal 4.

The first state data may be data acquired from the facility 2 via the controller 3, and may be stored as historical data in chronological order. As an example in the present embodiment, the first state data in the memory unit 411 may be stored in the memory unit 411 by the data storage unit 424.

According to the edge terminal 4 described above, the setting data for the container image is stored, and the first container image is run by providing the setting data, thereby implementing a container-type apparatus unit 4231 which acquires the first state data indicating the state of the facility 2. Therefore, the container-type apparatus unit 4231 which acquires the first state data of a specific facility 2 can be implemented by acquiring the first container image having versatility, thereby allowing to save effort in preparing the container image, unlike a case where the container image is prepared for each of the facilities 2. Also, unlike a case where the repository server 6 provides the setting data to the edge terminal 4, communication load between the repository server 6 and the edge terminal 4 can be reduced.

In addition, since the second container image is run by providing the setting data, and the container-type apparatus unit 4231 which is based on the first container image is updated to the container-type apparatus unit 4231 which is based on the second container image, the container-type apparatus unit 4231 can be updated by using a same setting data each time a new container image is prepared in the repository server 6. Therefore, unlike a case where the container-type apparatus unit 4231 is updated by preparing the setting data for each container image to be updated, the container-type apparatus unit 4231 can be updated more easily.

In addition, since the first state data of the facility 2 is acquired by the data storage unit 424 without going through the container-type apparatus unit 4231 and stored in the memory unit 411, the memory unit 411 can be caused to continuously store the first state data the even when the container-type apparatus unit 4231 is updated. In addition, since the first state data is stored in the memory unit 411 rather than in the container-type apparatus unit 4231, the first state data can be prevented from being deleted due to the container-type apparatus unit 4231 being updated or deleted. In addition, since the container-type apparatus unit 4231 transmits the second state data in accordance with the first state data stored in memory unit 411 to the AP server 5, unlike a case where the container-type apparatus unit 4231 stores the first state data, it is possible to acquire the first state data which is being updated by the container-type apparatus unit 4231 from the memory unit 411 to transmit the second state data in accordance with the first state data to the AP server 5.

In addition, since the second container image is acquired by the container acquisition unit 426 in response to the second container image being detected by the detection unit 425, the container-type apparatus unit 4231 can be updated quickly.

### (Operation)

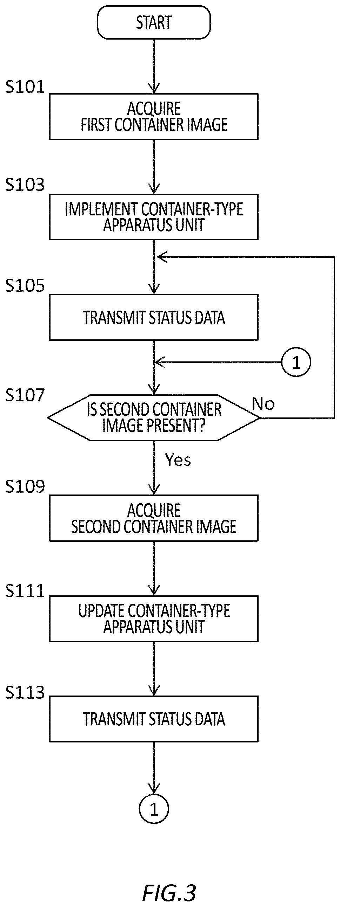

Fig. 3 shows an operation of the edge terminal 4. The edge terminal 4 transmits the state data of the facility 2 to the AP server 5 while implementing and updating the container-type apparatus unit 4231 by performing processing of step S101 to step S113. At the start of this operation, the setting data for the container image may be stored in the memory unit 411 in advance. Also, in parallel with this operation, the data storage unit 424 may acquire the first state data from each sensor of the facility 2 and cause the memory unit 411 to store the first state data.

At step S101, the container acquisition unit 426 acquires the first container image from the repository server 6. In response to the detection unit 425 detecting that the first container image is present in the repository server 6, the container acquisition unit 426 may acquire the first container image.

At step S103, the performance control unit 427 may cause the container runtime 422 to provide the setting data in the memory unit 411 and run the first container image, thereby implementing the container-type apparatus unit 4231.

At step S105, the container-type apparatus unit 4231 acquires the first state data from the memory unit 411 while also acquiring the second state data in accordance with the first state data from the data processing unit 4232, to transmit the second state data to the AP server 5.

At step S107, the detection unit 425 detects whether the second container image is present in the repository server 6. If the second container image is not detected to be present (step S107; No), the processing may proceed to step S105. As a result, the processing of step S105 may be repeated in the cycle of 5 seconds to 10 seconds if the second container image is not present. If the second container image is detected to be present (step S107; Yes), the processing may proceed to step S109.

At step S109, the container acquisition unit 426 acquires the second container image from the repository server 6.

At step S111, the performance control unit 427 may cause the container runtime 422 to provide the setting data and run the second container image, thereby implementing the container-type apparatus unit 4231. As a result, the container-type apparatus unit 4231 which is based on the first container image is updated to the container-type apparatus unit 4231 which is based on the second container image. As an example in the present embodiment, the container image for the apparatus has a capacity of about 1 gigabyte, and updating the container-type apparatus unit 4231 may take about 15 minutes to 20 minutes.

At step S113, the updated container-type apparatus unit 4231 acquires the first state data from the memory unit 411 while also acquiring the second state data in accordance with the first state data from the data processing unit 4232, to transmit the second state data to the AP server 5. The container-type apparatus unit 4231 may transmit, at step S113, the second state data which should have been transmitted while the container-type apparatus unit 4231 is updated at step S111. For example, the container-type apparatus unit 4231 may transmit to the AP server 5 the second state data in accordance with, from among the first state data stored in the memory unit 411, the first state data stored while the container-type apparatus unit 4231 is updated at step S111. As an example, the container-type apparatus unit 4231 may sequentially label the first state data which is read, from among the first state data in the memory unit 411, in the processing of step S105, and the first state data which is unlabeled, from among the first state data in the memory unit 411, may be set as the first state data stored while the container-type apparatus unit 4231 is updated. When the processing of step S113 is ended, the processing may proceed to step S107 described above.

According to the above operation, the second state data in accordance with the first state data is transmitted to the AP server 5 by the container-type apparatus unit 4231, and in response to the container-type apparatus unit 4231 being updated, the second state data in accordance with, from among the first state data stored in the memory unit 411, the first state data stored while the container-type apparatus unit 4231 is updated is transmitted to the AP server 5 after the container-type apparatus unit 4231 is updated. Accordingly, the second state data which was not transmitted due to an update of the container-type apparatus unit 4231 can be transmitted to the AP server 5 after the container is updated. As a result, the second state data can be prevented from going missing due to the update of the container-type apparatus unit 4231.

### (Example of Variations)

In the embodiment described above, the system 1 is described as including the AP server 5 and the thin client 8, but the system 1 may not include any of these. If the system 1 does not include the AP server 5, the integrated server 7 may be the second server, and the container-type apparatus unit 4231 of the edge terminal 4 may transmit the second state data to the integrated server 7.

Further, although the edge terminal 4 is described as having the data storage unit 424 in the software unit 42, the edge terminal 4 may have the data storage unit 424 in the hardware unit 41. Although the edge terminal 4 is described as having the memory unit 411 in the hardware unit 41, the edge terminal 4 may have the memory unit 411 in the software unit 42.

Further, the edge terminal 4 is described as having the data processing unit 4232 and the data storage unit 424, but the edge terminal 4 may not have any of these. If the edge terminal 4 does not include the data processing unit 4232, the container-type apparatus unit 4231 may generate the second state data in accordance with the first state data. If the edge terminal 4 does not include the data storage unit 424, the container-type apparatus unit 4231 may also function as the data storage unit 424 to acquire the first state data from the facility 2 (as an example, acquire from the facility 2 via the controller 3) to cause the memory unit 411 to store the first state data. In this case, the setting data stored in the memory unit 411 may have the address of the storage area where the first state data is stored in the controller 3 as an address from which the first state data is acquired. When the container-type memory unit 4231 acquires the first state data from each sensor of the facility 2 via the controller 3, the address from which the first state data is acquired may include a data address of the first state data measured by each sensor. The container-type apparatus unit 4231 may acquire first state data in response to the acquisition request for first state data in a similar manner as the data storage unit 424, and may acquire the first state data from the facility 2 within a the range not exceeding the predetermined maximum amount of data per unit time. The container-type apparatus unit 4231 may, in response to the total amount of the first state data exceeding the maximum amount of data, acquire the first state data from the facility 2 by the amount of data which is less than or equal to the maximum amount of data. This makes it possible to sequentially acquire the first state data by the amount of data which exceeds the maximum amount of data, even if an acquisition of the first state data is interrupted by the update of the container-type apparatus unit 4231 and the total amount of the unacquired first state data exceeds the maximum amount of data, so that the first state data acquired can be prevented from going missing due to the update of the container-type apparatus unit 4231.

In addition, although the performance control unit 427 is described as updating the container-type apparatus unit 4231 in response to the second container image being acquired, the performance control unit 427 may update the container-type apparatus unit 4231 under another condition. For example, the container acquisition unit 426 may, in response to acquiring the second container image, notify the user to that effect, and the performance control unit 427 may update the container-type apparatus unit 4231 in response to the user operation instructing to perform the update. When the container-type apparatus unit 4231 performs a processing of a predetermined content during a predetermined time period, the performance control unit 427 may update the container-type apparatus unit 4231 at a time different from the time period. For example, when the container-type apparatus unit 4231 performs the processing for 30 minutes every 12 hours (as an example, when the processing is performed during the time period of 00:00 to 00:30 or 12:00 to 12:30), the update may be performed immediately after the time period during which the processing is performed, or the update may be performed during a time halfway between the time periods during which the processing is performed. As a result, the container-type apparatus unit 4231 can be prevented from being updated during the processing by the container-type apparatus unit 4231, which would cause the processing to be interrupted, to ensure that the processing by the container-type apparatus unit 4231 can be performed.

Further, although the edge terminal 4 is described as having a single container-type apparatus unit 4231, the edge terminal 4 may have two redundant container-type apparatus unit 4231. The two container-type apparatus unit 4231 may be implemented on a common container runtime 422 or may be implemented on separate container runtimes 422. Alternatively, the system 1 may include two redundant edge terminals 4 within a single site 100, and each edge terminal 4 may each have a single container-type apparatus unit 4231.

When the container-type apparatus unit 4231 and the edge terminal 4 are redundant, the performance control unit 427 may, until an update of one of the container-type apparatus unit 4231 (also referred to as a container-type apparatus unit 4231A) is completed, maintain another of the container-type apparatus unit 4231 (also referred to as a container-type apparatus unit 4231B) in an operational state, and in response to the update of the container-type apparatus unit 4231A being completed, cause the container-type apparatus unit 4231A to operate, to update the container-type apparatus unit 4231B. This allows the container-type apparatus unit 4231 to be updated while causing any of the container-type apparatus unit 4231 to operate, so that the acquisition of the first state data and a transmission of the second state data can be prevented from being halted due to the update of the container-type apparatus unit 4231. When the edge terminal 4 is redundant, the performance control unit 427 of each of the edge terminal 4 may communicate with each other to notify that the update of the container-type apparatus unit 4231 is completed.

The performance control unit 427 may, in response to the update of the container-type apparatus unit 4231A being completed and the container-type apparatus unit 4231B being in a standby state, update the container-type apparatus unit 4231B. The container-type apparatus unit 4231 being in the standby state may be a state in which the container-type apparatus unit 4231 is not performing any of the processing of acquiring the first state data and the second state data or the transmission of the second state data. When the container-type apparatus unit 4231B is performing any of these processing when the update of the container-type apparatus unit 4231A is completed, the performance control unit 427 may update the container-type apparatus unit 4231B after the processing is completed and the container-type apparatus unit 4231B enters the standby state. As a result, the container-type apparatus unit 4231B can be prevented from being updated in a period during which the container-type apparatus unit 4231B is performing the processing, which would cause the processing to be interrupted.

The performance control unit 427 may update the container-type apparatus unit 4231B after causing the updated container-type apparatus unit 4231A to transition to the operational state, and after the container-type apparatus unit 4231B which is in the operational state enters the standby state. Causing the updated container-type apparatus unit 4231A to transition to the operational state may take, as an example, about 15 seconds. While the container-type apparatus unit 4231A (or 4231B) is updated, the second state data may be transmitted to the AP server 5 by the container-type apparatus unit 4231B (or 4231A) which is not updated, and the setting value from the integrated server 7 may be provided to the controller 3.

The performance control unit 427 may, upon completion of the update of each of the container-type apparatus unit 4231A and the container-type apparatus unit 4231B, cause any one of the container-type apparatus unit 4231 (the container-type apparatus unit 4231A, as an example) to enter the operational state, and maintain another of the container-type apparatus unit 4231 (the container-type apparatus unit 4231B, as an example) in a standby state. The container-type apparatus unit 4231 which is in the standby state may monitor an operation of the container-type apparatus unit 4231 which is in the operational state. When the container-type apparatus unit 4231 which is in the standby state detects abnormality of the container-type apparatus unit 4231 which is in the operational state, the container-type apparatus unit 4231 which is in the operational state may be switched with the container-type apparatus unit 4231 which is in the standby state by the performance control unit 427.

Various embodiments of the present invention may be described with reference to flowcharts and block diagrams whose blocks herein may represent (1) steps of processes in which operations are performed or (2) sections of apparatuses responsible for performing operations. Particular steps and sections may be implemented by dedicated circuit, programmable circuit provided along with computer-readable instructions stored on computer readable media, and/or processors provided along with computer-readable instructions stored on computer readable media. Dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer readable medium may include any tangible device that can store instructions to be executed by a suitable device, and as a result, the computer readable medium having instructions stored thereon includes a product including instructions that can be executed in order to create means for executing operations designated in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, or the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like, and a conventional procedural programming language such as a "C" programming language or a similar programming language.

The computer-readable instruction may be provided for a processor or programmable circuit of a programmable data processing apparatus, such as a computer, locally or via a local area network (LAN), a wide area network (WAN) such as the Internet, or the like to execute the computer-readable instruction in order to create means for executing the operations specified in the flowcharts or block diagrams. Herein, the computer may be a personal computer (PC), a tablet computer, a smart phone, a workstation, a server computer, or a computer such as a general purpose computer or a special purpose computer, or may be a computer system to which a plurality of computers are connected. Such computer system to which the plurality of computers are connected is also referred to as a distributed computing system, and is a computer in a broad sense. In a distributed computing system, each of the plurality of computers execute a part of a program, and pass data, on which the program is being executed, between the computers as needed, so that the plurality of computers collectively execute the program.

Examples of the processor include a computer processor, a central processing unit (CPU), a processing unit, a microprocessor, a digital signal processor, a controller, a microcontroller, and the like. The computer may include one processor or a plurality of processors. In a multi-processor system including a plurality of processors, the plurality of processors collectively execute a program by each of the processors executing a portion of the program, and passing data during the execution of the program among processors as needed. For example, in execution of multiple tasks, each of the plurality of processors may execute a portion of each task pieces by pieces by performing task-switching for each time slice. In this case, which portion of one program each processor is responsible for executing dynamically changes. Moreover, which portion of the program each of the plurality of processor is responsible for executing may be determined statically by multi-processor-aware programming.

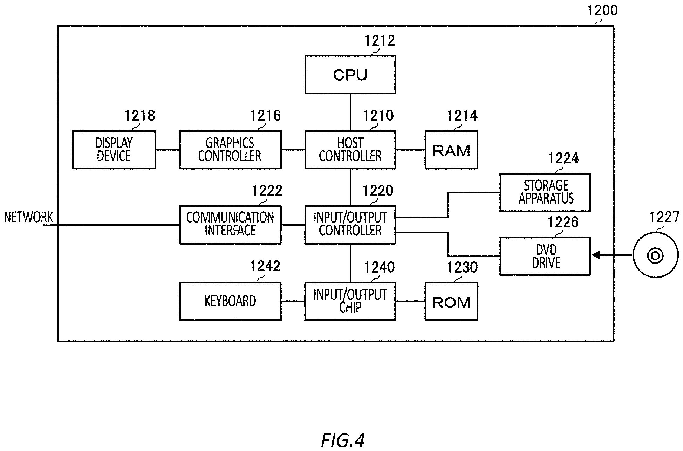

Fig. 4 shows an example of computer 1200 in which a plurality of aspects of the present invention may be wholly or partially embodied. A program which is installed in the computer 1200 can cause the computer 1200 to function as one or more "sections" in an operation or an apparatus associated with the embodiment according to the present invention, or can cause the computer 1200 to perform the operation or the one or more sections of the apparatus, and/or can cause the computer 1200 to perform processes or steps of the processes of the embodiment according to the present invention. Such a program may be performed by a CPU 1212 so as to cause the computer 1200 to perform certain operations associated with some or all of the blocks of flowcharts and block diagrams described herein.

The computer 1200 according to the present embodiment includes a CPU 1212, a RAM 1214, a graphics controller 1216, and a display device 1218, which are mutually connected by a host controller 1210. The computer 1200 also includes input/output units such as a communication interface 1222, a hard disk drive 1224, a DVD-ROM drive 1226, and an IC card drive, which are connected to the host controller 1210 via an input/output controller 1220. The computer also includes legacy input/output units such as an ROM 1230 and a keyboard 1242, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 on a frame buffer or the like provided in the RAM 1214 or in itself, and causes the image data to be displayed on a display device 1218.

The communication interface 1222 communicates with other electronic devices via a network. The hard disk drive 1224 stores programs and data which are used by the CPU 1212 within the computer 1200. The DVD-ROM drive 1226 reads a program or data from a DVD-ROM 1201 and provides the program or data to the hard disk drive 1224 via the RAM 1214. The IC card drive reads the programs and the data from the IC card, and/or writes the programs and the data to the IC card.

The ROM 1230 stores therein a boot program or the like that is performed by the computer 1200 at the time of activation, and/or a program depending on the hardware of the computer 1200. The input/output chip 1240 may also connect various input/output units to the input/output controller 1220 via a parallel port, a serial port, a keyboard port, a mouse port, or the like.

A program is provided by computer readable media such as the DVD-ROM 1201 or the IC card. The program is read from the computer readable media, installed into the hard disk drive 1224, RAM 1214, or ROM 1230, which are also examples of computer readable media, and performed by the CPU 1212. Information processing written in these programs is read by the computer 1200, and provides cooperation between the programs and the various types of hardware resources described above. An apparatus or method may be constituted by implementing the operation or processing of information in accordance with the usage of the computer 1200.

For example, when communication is performed between the computer 1200 and an external device, the CPU 1212 may perform a communication program loaded onto the RAM 1214 to instruct communication processing to the communication interface 1222, based on the processing written in the communication program. The communication interface 1222, under control of the CPU 1212, reads transmission data stored on a transmission buffer processing region provided in a recording medium such as the RAM 1214, the hard disk drive 1224, the DVD-ROM 1201, or the IC card, and transmits the read transmission data to a network or writes reception data received from the network to a reception buffer processing region or the like provided on the recording medium.

Further, the CPU 1212 may cause all or a necessary portion of a file or a database to be read into the RAM 1214, the file or the database having been stored in an external recording medium such as the hard disk drive 1224, the DVD-ROM drive 1226 (DVD-ROM 1201), the IC card, or the like, to perform various type of processing on the data on the RAM 1214. The CPU 1212 then writes back the processed data to the external recording medium.

Various types of information such as various types of programs, data, tables, and databases may be stored in a recording medium and subjected to information processing. The CPU 1212 may perform various types of processing on the data read from the RAM 1214, which includes various types of operations, information processing, conditional judging, conditional branching, unconditional branching, search/replace of information, etc., as described throughout this disclosure and designated by an instruction sequence of programs, and writes the result back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may retrieve, out of the plurality of entries, an entry with the attribute value of the first attribute specified that meets a condition, read the attribute value of the second attribute stored in the entry, and thereby acquiring the attribute value of the second attribute associated with the first attribute satisfying a predetermined condition.

The above-explained program or software modules may be stored in the computer readable media on or near the computer 1200. In addition, a recording medium such as a hard disk or a RAM provided in a server system connected to a dedicated communication network or the Internet can be used as the computer readable media, thereby providing the program to the computer 1200 via the network.

While the present invention has been described above with the embodiments, the technical scope of the present invention is not limited to the above-described embodiments. It is apparent to persons skilled in the art that various alterations or improvements can be added to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be implemented in any order as long as the order is not indicated by "prior to," "before," or the like and as long as the output from a previous process is not used in a later process. Even if the operational flow is described by using phrases such as "first" or "next" for the sake of convenience in the claims, specification, and drawings, it does not necessarily mean that the process must be performed in this order.

### EXPLANATION OF REFERENCES

1: system,
2: facility,
3: controller,
4: edge terminal,
5: AP server,
6: repository server,
7: integrated server,
8: thin client,
41: hardware unit,
42: software unit,
100: site,
411: memory unit,
421: OS,
422: container runtime,
423: container group,
424: data storage unit,
425: detection unit,
426: container acquisition unit,
427: performance control unit,
1200: computer,
1201: DVD-ROM,
1210: host controller,
1212: CPU,
1214: RAM,
1216: graphics controller,
1218: display device,
1220: input/output controller,
1222: communication interface,
1224 hard disk drive,
1226: DVD-ROM drive,
1230: ROM,
1240: input/output chip,
1242: keyboard,
4231: container-type apparatus unit,
4232: data processing unit.

## Claims

1. An apparatus comprising:
a memory unit which stores setting data for a container image acquired from a first server;
a container acquisition unit which acquires a first container image from the first server; and
a performance unit which runs the first container image by providing the setting data, thereby implementing a container-type apparatus unit which acquires a first state data indicating a state of a facility.

2. The apparatus according to claim 1, wherein
the container acquisition unit further acquires from the first server a second container image which is different from the first container image; and
the apparatus further comprises:
a container updating unit which causes the performance unit to provide the setting data and run the second container image, thereby updating the container-type apparatus unit which is based on the first container image to the container-type apparatus unit which is based on the second container image.

3. The apparatus according to claim 2, comprising:
two container-type apparatus units, each container-type apparatus unit being the container-type apparatus unit, wherein
the container updating unit:
until an update of one of the container-type apparatus unit from among the two of the container-type apparatus unit is completed, maintains another of the container-type apparatus unit in an operational state; and
in response to the update of the one of the container-type apparatus unit being completed, cause the one of container-type apparatus unit to operate, to update the another of the container-type apparatus unit.

4. The apparatus according to claim 3, wherein
the container updating unit, in response to the update of the one of the container-type apparatus unit being completed and the another of the container-type apparatus unit being in a standby state, updates the another of the container-type apparatus unit.

5. The apparatus according to any one of claims 2 to 4, wherein
the memory unit further stores a plurality of pieces of the first state data; and
the container-type apparatus unit:
transmits to a second server a second state data which is indicating a state of the facility and is in accordance with the first state data; and
in response to the container-type apparatus unit being updated by the container updating unit, transmits the second state data in accordance with, from among the plurality of pieces of first state data stored in the memory unit, the first state data stored while the container-type apparatus unit is updated, to the second server after the container-type apparatus unit is updated.

6. The apparatus according to claim 5, wherein
the container-type apparatus unit:
acquires the first state data from the facility and causes the memory unit to store the first state data; and
in response to an amount of the first state data which should be acquired from the facility at a current moment exceeding a maximum amount of data, acquires the first state data from the facility, piece by piece thereof which is less than or equal to the maximum amount of data.

7. The apparatus according to any one of claims 1 to 5, further comprising:
a data storage unit which acquires the first state data without going through the container-type apparatus unit and causes the memory unit to store the first state data, wherein
the container-type apparatus unit transmits to a second server a second state data which is indicating a state of the facility and is in accordance with the first state data stored in memory unit.

8. The apparatus according to claim 2, wherein
the container-type apparatus unit performs a processing of a predetermined content during a predetermined time period; and
the container updating unit updates the container-type apparatus unit at a time different from the predetermined time period.

9. The apparatus according to any one of claims 2 to 6 or 8, further comprising
a detection unit which detects whether the second container image is present in the first server, wherein
in response to the second container image being detected by the detection unit, the container acquisition unit acquires the second container image.

10. A system comprising:
the apparatus according to any one of claims 1 to 9;
a controller which controls the facility according to a setting value which is preset for the first state data; and
a server which provides a new setting value specified by a user operation to the controller via the container-type apparatus unit of the apparatus to cause the setting value in the controller to be updated to the new setting value.

11. A method comprising:
storing setting data for a container image acquired from a first server;
acquiring a container by acquiring a first container image from the first server; and
running the first container image by providing the setting data, thereby implementing a container-type apparatus unit which acquires a first state data indicating a state of a facility.

12. A program which causes a computer to function as:
a memory unit which stores setting data for a container image acquired from a first server;
a container acquisition unit which acquires a first container image from the first server; and
a performance unit which runs the first container image by providing the setting data, thereby implementing a container-type apparatus unit which acquires a first state data indicating a state of a facility.
